# EUROPÄISCHE PATENTSCHRIFT

(11) **EP 1 121 255 B1**
(45) Veröffentlichungstag und Bekanntmachung des Hinweises auf die Patenterteilung: **09.04.2003**
(21) Anmeldenummer: 99949003.0
(22) Anmeldetag: 15.10.1999
(51) Int. Cl.: B60B 27/02

(54) **NABE, INSBESONDERE FÜR FAHRRÄDER UND DERGLEICHEN**
HUB, ESPECIALLY FOR BICYCLES AND THE LIKE
MOYEU, EN PARTICULIER POUR BICYCLETTES OU ANALOGUES

(30) Priorität: 15.10.1998 DE 19847673
(43) Veröffentlichungstag der Anmeldung: 08.08.2001
(73) Patentinhaber: DT-Swiss AG., 2504 Biel (CH)
(72) Erfinder: SPAHR, Stefan, CH-2543 Lengnau (CH); JÄGER, Gerrit, CH-2603 Péry (CH)
(74) Vertreter: Wallinger, Michael, Dr.
(86) Internationale Anmeldenummer: EP9907838
(87) Internationale Veröffentlichungsnummer: WO00021762

(56) Entgegenhaltungen:
- EP-A- 0 791 482
- DE-A- 19 731 451
- DE-U- 9 419 357
- DE-U- 29 803 667

## Beschreibung

Die vorliegende Erfindung betrifft eine Nabe, die insbesondere für Fahrräder geeignet ist.

Außer bei Fahrrädern kann die Nabe auch für andere Anwendungszwecke vorgesehen sein, z. B. bei allen Arten von Anhängern, insbesondere Fahrradanhängern, bei Rollstühlen und dergleichen. Zur Vereinfachung wird die Erfindung aber im folgenden in bezug auf die Anwendung bei Fahrrädern beschrieben, wobei dies keinesfalls als Einschränkung der Anwendung verstanden werden soll.

Naben der hier in Rede stehenden Art dienen zur Verbindung der feststehenden Radachse mit dem um diese Achse rotierenden Laufrad. Dabei erfolgt die Verbindung zwischen der Nabe und der Felge des Laufrades über Stahlspeichen, wobei üblicherweise zwischen 24 und 36 Speichen verwendet werden, die nach einem vorgegebenen Muster in die Bohrungen der Nabe und der Felge eingezogen werden. Neben diesen Speichen werden heute zunehmend auch Verbindungen verwendet, bei denen nur eine geringe Zahl von z. B. 3 oder 4 Kunststoffabstützungen verwendet werden, oder es werden Scheiben, z. B. Karbonscheiben benutzt.

Insbesondere bei Rädern, die im sportlichen Bereich eingesetzt werden, und ganz besonders bei Rädern für den Einsatz bei Wettkämpfen, werden an die Nabe hohe Anforderungen gestellt. Die Nabe soll einerseits mit möglichst geringem Reibungswiderstand drehen, andererseits soll sie eine weitgehend spielfreie Abstützung ermöglichen, nur in geringem Maße verschmutzen und verschleißen und leicht zu montieren und demontieren sein.

Üblicherweise werden die Hinterräder von Fahrrädern angetrieben. Dazu ist neben dem eigentlichen Nabengehäuse auf der Achse der Hinterradnabe ein Rotor oder Antreiber angeordnet, auf welchem ein oder mehrere Zahnräder bzw. Kettenzahnräder fest angebracht werden können, um die Antriebskraft auf das Hinterrad zu übertragen.

Damit die vordere Tretkurbel bei einer Bergabfahrt nicht ständig mitdreht, wird meist in die Hinterradnabe ein Freilauf eingebaut, welcher Antriebskraft des Antreibers oder Rotors von dem Rotor auf das Nabengehäuse und somit das Hinterrad überträgt, während beim Rückwärtstreten der Freilauf bewirkt, daß das Nabengehäuse und der Rotor sich gegeneinander drehen können.

Im Stand der Technik ist mit dem deutschen Gebrauchsmuster DE 94 19 357 U eine gattungsgemäße Nabe mit einem Freilauf bekanntgeworden, welcher zuverlässig und schnell beim Aufbringen von Antriebskraft diese von dem Rotor auf das Nabengehäuse überträgt, während andererseits die Reibungsverluste relativ gering sind, wenn der Benutzer die Pedale nicht betätigt.

Bei diesem Freilauf wird über ein Paar von Zahnscheiben ein Vorwärtsdrehmoment des Rotors übertragen, während beim Rückwärtstreten die Zähne außer Eingriff kommen.

Ein Nachteil dieses Freilaufs ist, daß eine leichte Verkippung einer Zahnscheibe zu einem größeren Verschleiß der stärker belasteten Zähne führt, so daß die Haltbarkeit begrenzt ist.

Der vorliegenden Erfindung liegt die Aufgabe zugrunde, eine Nabe für ein Fahrrad zu schaffen, welche die vorgenannten Anforderungen erfüllt und welche insbesondere eine zuverlässige Funktion bei guter Demontierbarkeit und eine hohe Haltbarkeit aufweist.

Diese Aufgabe wird erfindungsgemäß durch den Gegenstand des Anspruchs 1 gelöst. Zu bevorzugende Weiterbildungen der Erfindung sind Gegenstand der Unteransprüche.

Die vorliegende Erfindung schafft eine Nabe mit hoher Funktionssicherheit und Haltbarkeit, da durch den in der Nabe enthaltenen Freilauf im Falle der Kraftübertragung eine zuverlässige, haltbare und formschlüssige Verbindung erreicht wird, während z. B. bei einer Talfahrt beim Nichttreten die Reibungsverluste klein sind.

Die Nabe weist als Vorderradnabe zwei und als Hinterradnabe vorzugsweise vier Lagereinrichtungen auf. Diese Lagereinrichtungen sind vorzugsweise als Kugel-, besonders bevorzugt als Rillenkugellager gestaltet, wobei vorzugsweise besonders reibungsarme Lager und reibungsarme Schmiermittel verwendet werden.

Neben einer Nabenachse, welche in bezug auf das Nabengehäuse drehbar gelagert ist, weist die Nabe einen in bezug auf die Nabenachse drehbar gelagerten Rotor und eine zwischen den Rotor und das Nabengehäuse angeordnete bzw. geschaltete Freilaufeinrichtung, die wenigstens zwei Zahnscheiben aufweist, die mit einer Vorspanneinrichtung aufeinander gedrückt werden und derart gestaltet sind, daß sie ein Drehmoment des Rotors in Fahrtrichtung von dem Rotor auf das Nabengehäuse übertragen. In einer bevorzugten Weiterbildung sind die Zahnflächen auf einer Seitenfläche angeordnet und stehen im Falle der Drehmomentübertragung miteinander in Eingriff.

Die Zahnscheiben sind im wesentlichen konzentrisch zur Nabenachse angeordnet, und im bestimmungsgemäßen Zusammenbau liegen die Scheiben wenigstens im Ruhezustand im wesentlichen in einer Ebene senkrecht zu einer Achsenlinie dieser Nabenachse.

Die Zahnscheiben werden schwimmend gehalten, so daß im Betrieb eine Verkippung der Zahnscheibe gegenüber dieser Ebene senkrecht zur Achsenlinie möglich ist.

In der erfindungsgemäßen Nabe sind diese Zahnscheiben benachbart angeordnet, wobei auf den Außenseiten der benachbarten Zahnscheiben jeweils eine Feder diese Zahnscheiben gegeneinander drückt. Besonders bevorzugt ist wenigstens eine dieser Federn als Spiralfeder ausgeführt.

Die erfindungsgemäße Nabe hat viele Vorteile.

Die Verwendung zweier schwimmend gelagerter Zahnscheiben hat den Vorteil, daß eine Verkippung der ersten Zahnscheibe eine entsprechende Verkippung der zweiten Zahnscheibe bewirkt, so daß die auf den Zahnscheiben angeordneten Zähne im Falle der Drehmomentübertragung immer zuverlässig miteinander in Eingriff stehen.

Eine solche Ausgestaltung hat viele Vorteile, da durch die Verwendung von zwei Federn, die symmetrisch von beiden Seiten auf die benachbarten Zahnscheiben drücken, eine symmetrische Belastung erreicht wird und durch die Verwendung von zwei Federn eine schnellere Reaktion beim Antritt beobachtet werden kann. Dadurch reagiert der Freilauf beim Aufbringen von Antriebskraft noch schneller als bei herkömmlichen Freiläufen.

Die Zahnscheiben des Freilaufes sind in einer weiteren bevorzugten Ausführungsform als relativ dünne Scheiben gestaltet, deren Außendurchmesser zwischen 20 und 40 mm, bevorzugt etwa 30 mm beträgt. Die Dicke der Scheibe beträgt zwischen 4 und 12 mm, bevorzugterweise etwa 8 mm. Auf einer Seiten- oder Scheibenfläche ist eine Vielzahl von Zähnen angeordnet, wobei die Anzahl dieser Zähne >2 ist und bevorzugterweise zwischen 4 und 60 und besonders bevorzugt zwischen 6 und 48 liegt.

Besonders bevorzugterweise sind die in die Nabe eingebauten Zahnscheiben leicht und schnell auswechselbar und die Nabe leicht zu öffnen, um ein einfaches und unter Umständen tägliches Reinigen zu ermöglichen, wie es etwa im Profi-Radsportbereich üblich ist.

Eine höhere Zähnezahl führt zu einer höheren Belastbarkeit des Freilaufs, während bei einer kleineren Zähnezahl die Reibung geringer ist.

Durch einen einfachen und schnellen Austausch der entsprechenden Zahnscheiben kann der Benutzer je nach Anwendungsfall zwischen den einzelnen Vorteilen auswählen, so daß er bei Fahrten in der Ebene oder bei Hochgeschwindigkeitsfahrten Zahnscheiben mit einer geringeren Zähnezahl einbaut, während bei Bergfahrten oder Geländefahrten eine größere Zähnezahl günstiger ist, da die Belastbarkeit größer ist.

In einer weiteren bevorzugten Ausführungsform der erfindungsgemäßen Nabe sind die Zähne der Zahnscheiben auf einem ringförmigen Bereich der Scheiben- oder Seitenfläche angeordnet, wobei besonders bevorzugt die Zähne auf einem der äußeren ringförmigen Bereiche der Zahnscheibe angeordnet sind.

In einer bevorzugten Weiterbildung der erfindungsgemäßen Nabe werden zwei im wesentlichen gleiche oder identische oder derart gefertigte Zahnscheiben eingesetzt, daß bei zwei mit den Zahnflächen direkt benachbart angeordneten Zahnscheiben wenigstens ein Teil der Zähne der einen Zahnscheibe in Vertiefungen zwischen den Zähnen dieser zweiten Zahnscheibe eingreift, wobei die Zähnezahl dieser beiden Zahnscheiben gleich oder auch unterschiedlich sein kann.

Dies ist ein weiterer Vorteil der erfindungsgemäßen Nabe, da durch den Austausch einer Zahnscheibe der schon oben beschriebene Effekt erzielt werden kann: bei Einsatz einer Zahnscheibe mit kleinerer Zähnezahl wird die Reibung verringert, und bei Einsatz einer Zahnscheibe mit größerer Zähnezahl wird die Festigkeit erhöht.

Die einzelnen Zähne sind bevorzugterweise asymmetrisch geformt. Eine lange, flache Steigung, die einen Neigungswinkel von 5 - 30°, bevorzugt etwa 11° ± 1° aufweist, bildet eine Flanke, die zweite Flanke des Zahns hat einen stumpfen Winkel von etwa 100° zur Scheibenoberfläche.

Bei Drehmomentübertragung in Fahrtrichtung werden die Zahnscheiben durch die Vorspanneinrichtung aufeinander gedrückt, und die steilen Flanken der Zähne übertragen das Drehmoment.

Beim Rückwärtstreten gleiten die flachen Steigungsseiten der Zähne aneinander entlang und bringen die beiden Zahnscheiben außer Eingriff.

In einer weiteren Weiterbildung der erfindungsgemäßen Nabe sind die Seitenflächen der Zahnscheiben derart gestaltet, daß zwei in Kontakt stehende Zahnscheiben im wesentlichen mit einem Großteil der Scheibenflächen in Kontakt stehen.

In einer weiteren Ausbildung der erfindungsgemäßen Nabe weisen die Zahnscheiben auf ihrer Außenfläche über den Umfang verteilt in radialer Richtung eine Vielzahl von Fortsätzen auf, welche eine weitere radiale Verzahnung bilden und welche in radialer Richtung in einer Ebene dieser Scheibenfläche einen dreieckigen, rechteckigen, sinus-, zahn- oder trapezförmigen Querschnitt aufweisen.

In einer anderen Weiterbildung der Erfindung ist in einer im bestimmungsgemäßen Zusammenbau zur Nabenmitte ausgerichteten, im wesentlichen zentrischen Bohrung oder Öffnung im Rotor eine dieser Zahnscheiben im wesentlichen drehfest angeordnet, und diese Öffnung im Rotor ist derart gestaltet, daß diese Fortsätze dieser Zahnscheibe in radiale Vertiefungen dieses Rotors ragen.

Im bestimmungsgemäßen Zusammenbau ist in dem Nabengehäuse eine zum Rotor hin gerichtete im wesentlichen zentrische Bohrung oder Öffnung angeordnet, in welcher ein Gewindering in dieses Nabengehäuse eingeschraubt ist, welcher eine Bohrung aufweist, in welcher eine Zahnscheibe im wesentlichen drehfest angeordnet ist. Diese Bohrung in dem Gewindering ist bevorzugterweise derart gestaltet, daß die Fortsätze dieser Zahnscheibe in radiale Vertiefungen dieses Gewinderings ragen.

Diese Ausbildungen sind besonders vorteilhaft, da die eine Zahnscheibe drehfest im Rotor angeordnet ist, während die andere Zahnscheibe drehfest im Nabengehäuse angeordnet ist. Im Kontakt miteinander kann ein Vorwärtsdrehmoment vom Rotor auf die erste Zahnscheibe, von dort auf die zweite Zahnscheibe und von der zweiten Zahnscheibe auf das Nabengehäuse übertragen werden.

Die Bohrung im Rotor und die Bohrung im Gewindering sind bevorzugterweise derart gestaltet, daß sie zur Aufnahme nur eines Zahnringes geeignet sind, so daß ein Übertritt des Zahnringes von der einen auf die andere Bohrung ausgeschlossen ist.

Bei allen bisher beschriebenen Ausführungsformen sind die Zahnscheiben für eine vorbestimmte maximale Zähnezahl ausgelegt. Bei einer Zahnscheibe mit dieser maximalen Zähnezahl sind die Zähne in Umfangsrichtung auf der Seitenfläche gleichmäßig verteilt, während bei einer Zahnscheibe mit einer kleineren Zähnezahl bestimmte Zähne weggelassen werden, die vorhandenen aber auf dem gleichen Raster liegen wie bei einer Zahnscheibe mit maximaler Zähnezahl.

Wenigstens bei einer Zahnscheibe mit einer Zähnezahl, welche nicht durch ganzzahlige Division aus dieser maximalen Zähnezahl bestimmbar ist, kann der Umfangsabstand von Zahn zu Zahn variieren.

Eine Zahnscheibe mit einer kleineren als der maximalen Zähnezahl kann hergestellt werden, indem vorzugsweise über den Umfang symmetrisch verteilt bestimmte Zähne weggelassen werden, so daß bei diesen Stellen der Umfangsabstand von einem zum nächsten Zahn größer ist als an anderen Stellen.

Diese Ausgestaltung ist besonders vorteilhaft, da durch diese Maßnahme Zahnscheiben miteinander kombinierbar sind, die nahezu beliebige, auch unterschiedliche Zähnezahlen aufweisen.

In einer Weiterbildung der erfindungsgemäßen Nabe ist der Rotor ohne besonderes Werkzeug von Hand entfernbar.

Dies ist besonders vorteilhaft, da der Benutzer die Zahnringe dann besonders einfach austauschen kann.

Der Gewindering ist in einer bevorzugten Weiterbildung der erfindungsgemäßen Nabe aus einer Metalllegierung, bevorzugterweise aus einer Leichtmetalllegierung und besonders bevorzugt aus einer Aluminiumlegierung gefertigt.

Eine Leichtmetall- oder Aluminiumlegierung ist besonders vorteilhaft, da das Gewicht reduziert wird.

Wenigstens ein Teil der kraftübertragenden Flächen in der Nabe ist z. B. durch eine Oberflächenbehandlung oder ähnliche Maßnahme zusätzlich gehärtet. Dies ist besonders vorteilhaft, da die Lebensdauer und Belastbarkeit der Komponenten steigt.

Eine bevorzugte Weiterbildung der Erfindung schafft eine Nabe mit hoher Funktionssicherheit, da die erfindungsgemäß vorgesehene Dichtungseinrichtung den Zutritt von Wasser und Schmutz in den Nabenkörper und insbesondere den Zutritt zu den Lagereinrichtungen verhindert, oder zumindest weitestgehend vermeidet.

Der Begriff "weitestgehend vermeidet" wurde deshalb gewählt, da eine derartige Dichtung, im physikalischen Sinne gesehen, niemals vollständig dicht sein kann. Die Dichtung ist aber, insbesondere bei den nachfolgend beschriebenen bevorzugten Gestaltungen so ausgebildet, daß ein Zutritt von Nässe und Schmutz während des üblichen Gebrauchs und auch bei der üblichen Reinigung nicht möglich ist.

Gemäß einer bevorzugten Weiterbildung ist die Dichtungseinrichtung als Labyrinthdichtung gestaltet. Unter Labyrinthdichtung soll dabei eine Dichtung verstanden werden, bei der sich die gegeneinander relativ bewegenden Dichtflächen nicht berühren, sondern einen kleinen Dichtspalt dazwischen ausbilden. Dieser Dichtspalt wird mindestens einmal, vorzugsweise aber mehrere Male umgelenkt, und zwar vorzugsweise um einen Winkel von ca. 90°, so daß ein Zutritt von Flüssigkeit und Schmutz bei genügend eng gewähltem Dichtspalt praktisch unmöglich ist.

Die Verwendung einer Labyrinthdichtung hat den Vorteil, daß die Dichtung auch bei direktem Auftreffen eines Wasserstrahls nicht beschädigt oder wirkungslos wird. Insbesondere Mountainbikes werden nach dem Einsatz im Gelände regelmäßig mittels eines Hochdruckreinigers gereinigt, der Wasser mit einem Druck bis zu 150 bar auf die zu reinigenden Teile auftreffen läßt. Durch die mehrfache Umlenkung des Dichtspaltes der Labyrinthdichtung wird der beim Auftreffen entstehende Wasserdruck schnell und zuverlässig abgebaut, so daß er die Dichtung nicht beschädigen und das Wasser nicht in die Lager und das Innere der Nabe eindringen kann.

Um eine gute Dichtwirkung zu erzielen, ist es bevorzugt, 3 oder 4 Umlenkungen um ca. 90° vorzunehmen. Es ist aber auch möglich, weniger oder mehr Umlenkungen vorzusehen.

Gemäß einer anderen bevorzugten Ausführungsform ist die Dichteinrichtung als Elastomerdichtung mit einer elastischen Lippe ausgestaltet, und besonders bevorzugt ist die Dichtung im wesentlichen V-förmig gestaltet. Dabei ist vorzugsweise das Teil, welches in Relativbewegung zum abzudichtenden Teil steht, relativ dünn ausgestaltet, so daß eine elastische und mit relativ hohem Druck pro Fläche aufliegende Dichtfläche oder Dichtlippe erzielt wird, die trotzdem nur ein geringes Reibmoment erzeugt.

Gemäß einer besonders zu bevorzugenden Ausführungsform umfaßt die Dichtungseinrichtung sowohl eine Labyrinthdichtung als auch eine elastomere Dichtung. In diesem Fall ist vorzugsweise die elastomere Dichtung der Labyrinthdichtung nachgeschaltet, es ist jedoch auch möglich, diese Reihenfolge umzudrehen. Nachgeschaltet bedeutet, daß die Elastomerdichtung näher am Lager und die Labyrinthdichtung weiter vom Lager entfernt und zur Umgebung hin gerichtet ist.

Dabei ergibt sich, wie vorstehend ausgeführt, der Vorteil, daß der Zutritt von Wasser und Schmutz, z. B. auch bei Verwendung eines Hochdruckreinigers durch die Labyrinthdichtung stark eingeschränkt wird, und daß eventuelle Restmengen an Flüssigkeit, die durch die Labyrinthdichtung in die Nabe eintreten können, durch die Elastomerdichtung am Eindringen in das Lager gehindert werden.

Es ist weiterhin bevorzugt, insbesondere bei der Verwendung einer Labyrinthdichtung, die Dichtspalte und alle Flächen, die in Verbindung mit dem Dichtspalt bestehen, derart auszubilden, daß die bei der Drehung des Nabenkörpers entstehende Zentrifugalkraft ausgenutzt werden kann, um in die Labyrinthdichtung eingedrungenes Wasser nach außen zu fördern.

Auch bei der Kombination einer Labyrinthdichtung mit einer nachgeschalteten Elastomerdichtung wird man die Flächen des Dichtspaltes und die Flächen der Elastomerdichtung entsprechend ausbilden, so daß die Förderung von eingedrungenem Wasser nach außen einfach und zuverlässig funktioniert.

Gerade bei Einsätzen einer solchen Nabe für Wettkämpfe ist es unverzichtbar, daß trotz guter Dichtwirkung die Nabe regelmäßig zerlegt wird, um sicherzustellen, daß sich die Lager in optimalem Zustand befinden. Bei herkömmlichen Naben sind zum Teil komplizierte Spezialwerkzeuge erforderlich, um das Zerlegen zu ermöglichen, was die Wartung erschwert.

Die vorliegende Erfindung schlägt deshalb vor, die Nabe so zu gestalten, daß sie ohne oder weitestgehend ohne Werkzeug, oder zumindest ohne Spezialwerkzeug, zerlegt werden kann.

Dies wird gemäß einer bevorzugten Ausführungsform der Erfindung dadurch erreicht, daß das Lager über ein Anschlagteil gehalten wird, das vorzugsweise selbst lediglich durch Reibung gehalten ist. Vorzugsweise ist das Anschlagteil rotationssymmetrisch zur Achse selbst gestaltet und auf diese aufgeschoben, wobei die Haltefunktion dann durch einen Reibungswiderstand zwischen Anschlagteil und Achse erzeugt wird. Vorzugsweise wird die Haltefunktion durch einen Dichtungsring, vorzugsweise ein konventioneller O-Ring, erzeugt, der gleichzeitig eine Dichtung bezüglich Anschlagteil und Achse bewirkt.

Die Gestaltung hat den Vorteil, daß das Anschlagteil mit dem Dichtring ohne Werkzeug auf die Achse aufgesetzt und von dieser abgezogen wird. Gleichzeitig kann durch entsprechende Gestaltung des Dichtringes ein hohes Haltemoment erreicht werden, das das Anschlagteil zuverlässig auf der Achse hält.

Nur ergänzend sei darauf hingewiesen, daß das Anschlagteil bei dieser Gestaltung so beschaffen ist, daß es im eingebauten Zustand der Nabe an den Innenseiten der Ausfallenden, in denen die Nabe in der Vorderradgabel bzw. im Hinterbau gehalten ist, und damit dann durch die Verschraubung bzw. die Schnellspanneinrichtung, die die Achse und die Nabe im Ausfallende hält, gesichert ist.

Weitere Vorteile, Merkmale und Anwendungsmöglichkeiten der vorliegenden Erfindung ergeben sich aus der nachfolgenden Beschreibung eines Ausführungsbeispiels mit den Zeichnungen.

Darin zeigt:
- Figur 1: ein Ausführungsbeispiel einer erfindungsgemäßen Nabe für ein Hinterrad;
- Figur 2a: einen vergrößerten Ausschnitt der Darstellung gemäß Figur 1;
- Figur 2b: einen vergrößerten Ausschnitt der Darstellung gemäß Figur 1;
- Figur 3: eine perspektivische Explosionszeichnung einer erfindungsgemäßen Nabe in einer weiteren Ausführungsform;
- Figur 4a: eine Aufsicht eines Gewinderings gemäß der Ausführungsform nach Figur 3;
- Figur 4b: einen Querschnitt eines Gewinderings gemäß der Ausführungsform nach Fig. 3;
- Figur 5a: eine Aufsicht einer Zahnscheibe des Ausführungsbeispiels gemäß Figur 3;
- Figur 5b: eine Seitenansicht einer Zahnscheibe gemäß Ausführungsbeispiel nach Figur 3; und
- Figur 5c: einen vergrößerten Ausschnitt der Darstellung gemäß Figur 5b.

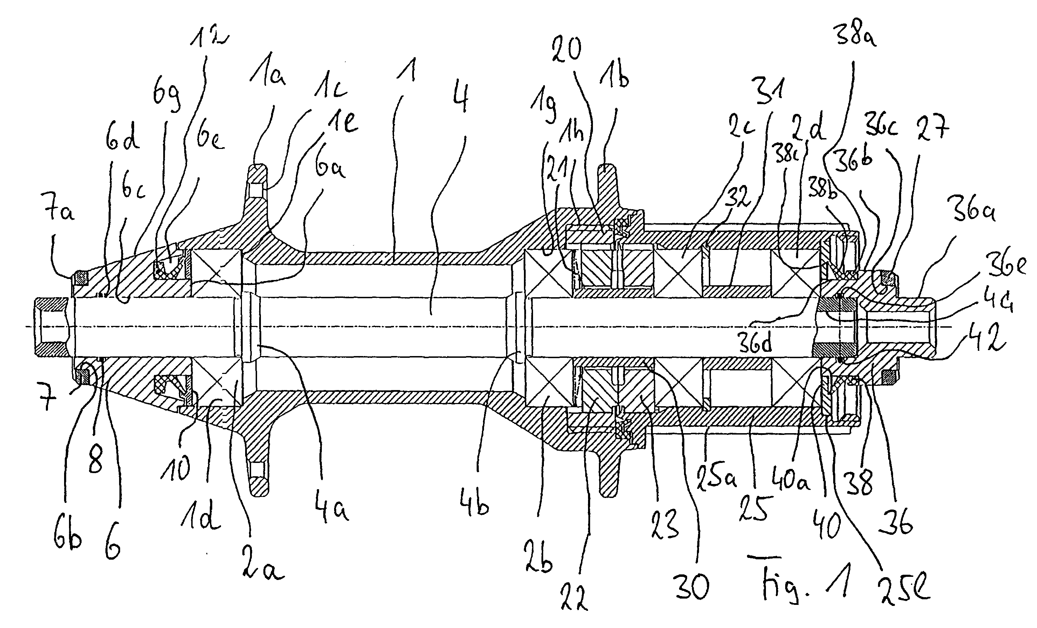

Figur 1 zeigt in einer Schnittdarstellung ein Nabengehäuse 1, welches mit Flanschen 1a und 1b versehen ist, die Bohrungen zu 1c zur Aufnahme von Speichen aufweisen.

Bei praktisch allen Fahrrädern ist das Ritzel für den Antrieb bzw. das Ritzelpaket für eine Kettenschaltung an der in Fahrtrichtung rechten Seite des Rades angeordnet. Dementsprechend wird hier im folgenden auch vom linken und vom rechten Teil der Nabe gesprochen, wobei rechts der Orientierung der Figur 1 entspricht.

Im linken Bereich der Nabe weist das Gehäuse eine zylindrische Lagerbohrung 1d auf, die von der Nabenmitte abgewandt geöffnet ist und in der ein herkömmliches Rillenkugellager 2 angeordnet ist, welches in der Figur nur schematisch dargestellt ist. Der äußere Laufring des Rillenkugellagers stützt sich auf der zylindrischen Lagerbohrung 1d und der innere Laufring auf einer Achse 4 ab. Diese Achse 4 ist beim Ausführungsbeispiel aus Stahl gefertigt und weist einen umlaufenden Anschlag 4a auf, an dem der innere Laufring des Wälzlagers 2 unverschieblich anliegt.

Das Wälzlager wird in dieser Position durch ein linkes Anschlagelement 6 gehalten, welches im wesentlichen rotationssymmetrisch gestaltet ist und außen kegelig, mit sich zur Nabenmitte erweiternden Durchmesser und innen zylindrisch gestaltet ist.

Das linke Anschlagelement 6 liegt mit einer unteren ringförmigen Kante 6a am inneren Laufring des Wälzlagers an und nimmt an der Drehbewegung des Nabenkörpers nicht teil.

In dem im montierten Zustand dem Ausfallende zuweisenden Ende mit kleinerem Durchmesser ist ein zylindrisch Ansatz 6b vorgesehen, auf welchem eine aus Stahl bestehende Zahnscheibe 7 aufgepreßt ist, die eine zum Ausfallende weisende Verzahnung 7a aufweist.

In der zylindrischen Innenbohrung 6c des linken Anschlagteils 6 ist ein ringförmiger Einstich 6d vorgesehen, in dem ein O-Ring 8 autgenommen ist. Die Abmessungen des O-Ringes 8 und des Einstiches 6d sind derart aufeinander abgestimmt, daß zwischen O-Ring und Achse eine Reibkraft erzeugt wird, die bewirkt, daß das Anschlagteil auf der Achse hält, aber ohne besonderes Werkzeug von der Achse abgezogen und auf diese wieder aufgesetzt werden kann.

Das linke Anschlagelement 6 ist mit einem zum Wälzlager weisenden, im Querschnitt trapezförmigen umlaufenden Einschnitt 6e versehen, dessen Außenfläche 6f im wesentlichen parallel zur Außenfläche 6g des Anschlagelements ist und dessen Innenfläche 6h zylindrisch und rotationssymmetrisch zur Achse 4 ausgebildet ist, wobei die Außenfläche 6f und die Innenfläche 6h durch eine senkrecht zur Achse 4 verlaufende Ringfläche 6i verbunden sind.

Zwischen dem zylindrischen Anschlagteil 6h dieser trapezförmigen Ausnehmung und der zylindrischen Ausnehmung 1d des Nabenkörpers ist ein Anschlagring 10 vorgesehen, welcher am äußeren Laufring des Wälzlagers und an der Fläche 1d anliegt und mit dieser rotiert.

Der Anlagering 10 hat einen umlaufenden, in die Ausnehmung hereinragenden Vorsprung 10a, welche nach innen hin durch eine zylindrische, zur Achse rotationssymmetrische Fläche und nach außen hin durch eine konische, zur Fläche 6f und zur Außenfläche 6g des Anschlags parallel verlaufende Fläche begrenzt ist. Die beiden Flächen sind durch eine Fläche verbunden, die senkrecht zur Achse 4 verläuft.

Innerhalb der trapezförmigen Ausnehmung 6e ist eine im wesentlichen V-förmige Elastomerdichtung vorgesehen, wobei die Dichtung so gestaltet ist, daß ein Arm des V rechtwinklig gestaltet ist und an den Flächen der Ausnehmung 6i und an der zylindrischen Fläche 6h anliegt und wobei der zweite Arm des V gegenüber der inneren zylindrischen Fläche mit einem spitzen Winkel geneigt ist und sich nach oben hin verjüngt. Die Öffnung des V weist radial nach außen. Die sich verjüngende Spitze 12b des zweiten Arms des V bildet eine Lippendichtung, welche mit einer oberen schmalen Fläche am Vorsprung 10a der Scheibe 10 abstützt.

Durch das Anschlagteil 6, den Nabenkörper 1 und die Scheibe 10 sowie den Vorsprung 10a wird ein Labyrinthdichtung geschaffen. Der Dichtspalt 13a ist senkrecht zur Achse 4 und wird von einer vorderen Fläche 6j des Anschlagteils 6 und von einer vorderen Fläche 1e des Nabenkörpers begrenzt. Rechtwinklig zur Fläche 6j ist eine zylindrische Fläche 6k vorgesehen, die gemeinsam mit einer zylindrischen Fläche 1f einen Dichtspalt 13b begrenzt, der senkrecht zum Dichtspalt 13a und damit parallel zur Achse verläuft. An die zylindrische Fläche 6k schließt sich eine weitere Ringfläche 61 an, die senkrecht zur Achse 4 verläuft und die gemeinsam mit dem oberen Bereich der Scheibe 10, deren Fläche ebenfalls senkrecht zur Achse ist, einen senkrecht zur Achse verlaufenden Dichtspalt 13c begrenzt.

Im stumpfen Winkel zur Fläche 6k ist eine Ausnehmung 6e nach außen begrenzende Fläche 6j angeordnet, die mit der ebenfalls nach außen weisenden Fläche 10a des Vorsprunges der Scheibe 10 einen im stumpfen Winkel zum Spalt 13c verlaufenden Dichtspalt 13d begrenzt.

Die Funktion dieses Teils der Nabe ist wie folgt:

Bei der Montage wird zunächst die Achse 4 in den Nabenkörper 1 eingelegt. Dann wird das Wälzlager 2a auf die Achse aufgeschoben, und liegt mit dem inneren Laufring am Anschlag 4a und mit dem äußeren Laufring an einem Anschlag 1b des Nabenkörpers an.

Anschließend wird der Ring 10 aufgeschoben und die V-förmige Dichtung sowie der O-Ring 6d in das Anschlagteil 6 eingelegt. Der Anschlag wird dann auf die Achse aufgesteckt und hält das Wälzlager fest.

Zur Wartung des Wälzlagers muß lediglich das Teil 6 abgenommen werden, dann ist das Wälzlager frei zugänglich und kann von der Achse abgenommen werden.

Die labyrinthartige Dichtung, gebildet durch die Spalten 13a, b, c, d verhindert den Zutritt von Wasser und Staub in hohem Maße. Da die Dichtung berührungsfrei arbeitet, entsteht keine Reibung. Aufgrund der mehrfachen Umlenkung des Dichtspaltes ist es auch für einen direkt auftreffenden Wasserstrahl aus dem Hochdruckreiniger nicht möglich, in die Ausnehmung 10 einzutreten.

Falls doch Wasser in die Ausnehmung 10 eintritt, wird dies durch die berührende Elastomerdichtung zuverlässig daran gehindert, bis zum Lager vorzudringen. Aufgrund des besonderen Schutzes der Elastomerdichtung durch die Labyrinthdichtung gibt es keinen direkten Wassereintritt in die Ausnehmung 11 und damit auch keine Druckbelastung der Lippe 12b mit einem Wasserstrahl. Die Lippe 12b kann deshalb mit geringerer Elastizität und geringerer Andruckkraft gestaltet werden, als dies sonst möglich wäre, wodurch die Reibung zwischen der Lippe und dem Ring weiter verringert wird.

Sollte trotz der Labyrinthdichtung Wasser in die Ausnehmung 11 eindringen, so wird dieses Wasser durch die Zentrifugalbewegung des Ringes und der rotierenden Wandung des Dichtspaltes wieder nach außen gefördert.

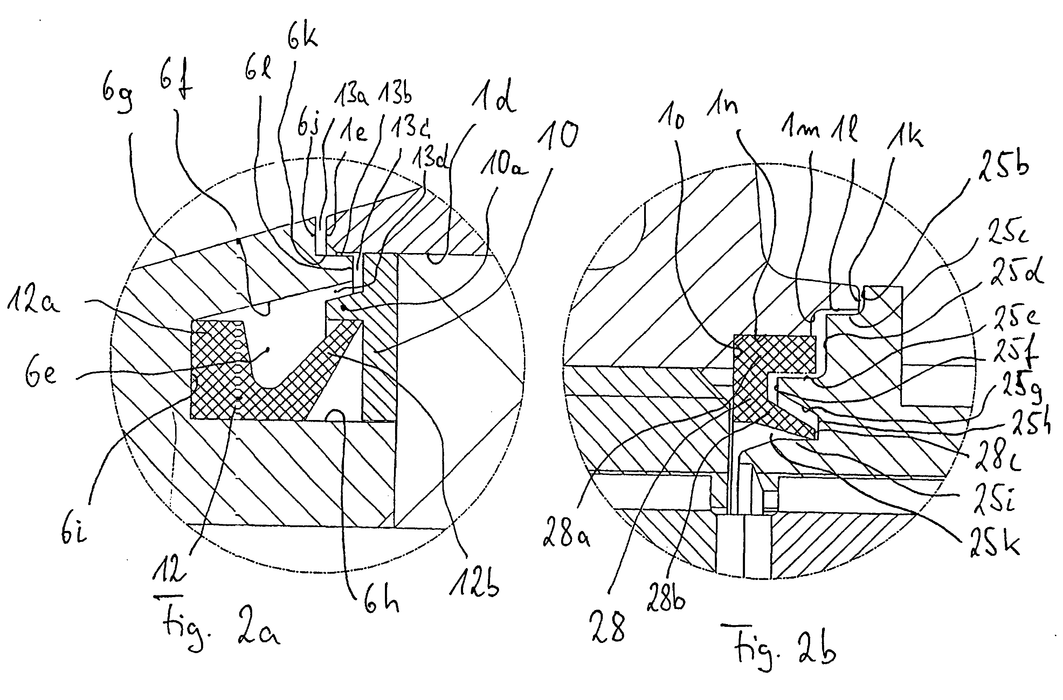

In Abwandlung des Ausführungsbeispiels, welches in Bezug auf die Figuren 1, 2a und 2b beschrieben worden ist, ist es auch möglich, die Scheibe 10 und/oder die Scheibe 40 wegzulassen. In diesem Fall läuft dann die Dichtung jeweils unmittelbar auf dem Laufring des Wälzlagers. Diese Gestaltung hat den Nachteil, daß sie nicht die entsprechend gute Dichtwirkung hat, wie beim Ausführungsbeispiel gemäß Figur 2a und 2b, dem gegenüber aber den Vorteil, daß der Aufwand geringer ist, da die Scheiben 10 und 40 nicht benötigt werden und daß damit auch das Gewicht und der Montageaufwand insgesamt verringert werden.

Im rechten Teil der Nabe ist eine zylindrische Ausnehmung 1g, die der zylindrischen Ausnehmung 1d entspricht und die ein Wälzlager 2b aufnimmt, das dem Wälzlager 2a entspricht. In entsprechender Weise ist auch ein Anschlag 4b vorgesehen, an dem sich der innere Laufring des Wälzlagers abstützt.

In einen weiteren zylindrischen Ansatz 1h, dessen Durchmesser größer ist als der Ansatz 1g, ist ein Gewindering 20 eingeschraubt, der im Zusammenwirken mit einer Feder 21, einer ersten Zahnscheibe 22 und einer zweiten Zahnscheibe 23 einen Freilauf bildet, welcher später beschrieben werden wird.

An den Nabenkörper 1 anschließend ist ein Rotor 25 vorgesehen, der eine Verzahnung 25a aufweist, in die entsprechend gestaltete Ausnehmung eines (nicht dargestellten) Ritzelpakets eingreifen.

Der Rotor 25 ist ebenfalls aus Aluminium oder aus einer sonstigen Leichtmetalllegierung, wie Titan und dergleichen gestaltet. Der Rotor rotiert während der Antriebsbewegung mit gleicher Drehzahl wie der Nabenkörper 1 und steht bei Stillstand des Kurbelantriebs still, so daß sich der Nabenkörper 1 dann in bezug auf den Rotor 25 bewegt.

Der Rotor stützt sich über ein Wälzlager 2c und ein Wälzlager 2d auf der Achse 4 ab, wobei diese Wälzlager wiederum dieselben Abmessungen aufweisen, wie die Wälzlager 2a und 2b.

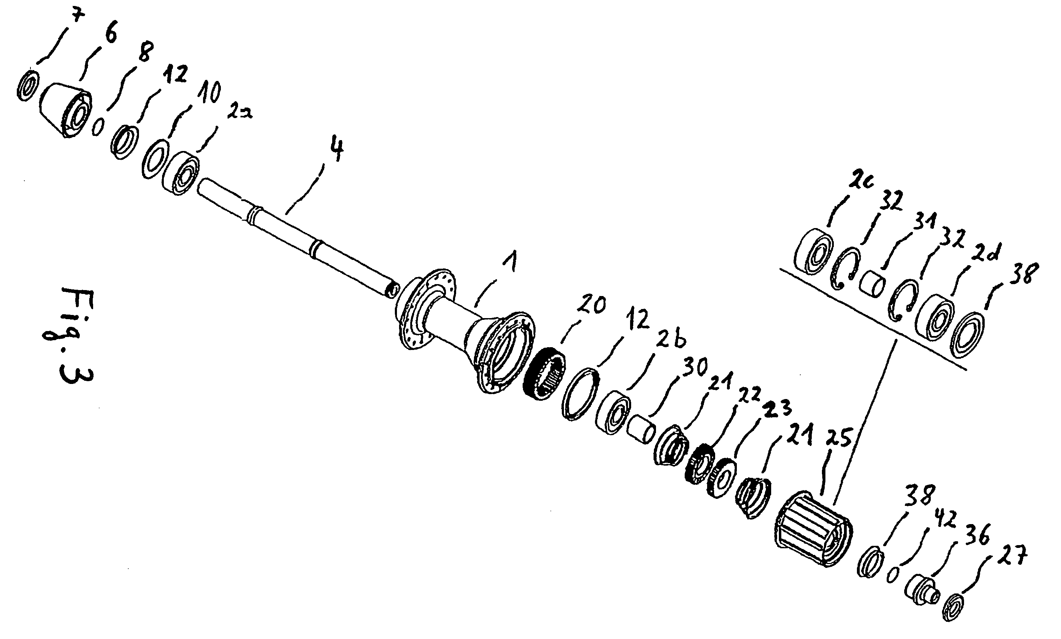

Fig. 3 zeigt ein weiteres Ausführungsbeispiel der erfindungsgemäßen Nabe in einer perspektivischen Explosionsansicht. Auf die Achse 4 wird von links ein Kugellager 2a, eine Abdeckscheibe 10, eine Dichtung 12, ein O-Ring 8 und der Endanschlag 6 mit der Rändelscheibe 7 aufgebracht. Nach dem Durchstecken durch das Nabengehäuse 1 wird von rechts der Gewindering 20 in das Nabengehäuse 1 eingeschraubt und die Dichtung 12, das Kugellager 2b und die Distanzhülse 30 in das Nabengehäuse eingeführt.

Die Spiraldruckfeder 21 lagert die Zahnscheibe 22 schwimmend, so daß sie gegenüber der Achsenlinie der Achse 4 verkippbar und gegen die Kraft der Spiraldruckfeder 21 axial verschiebbar ist.

Die Zähne der Zahnscheibe 22 weisen auf die rechts benachbarte Zahnscheibe 23, deren Zähne auf die Zahnscheibe 22 gerichtet sind.

Die Zahnscheibe 23 ist durch eine weitere Spiraldruckfeder 21 schwimmend gelagert und kann ebenfalls gegenüber der Achsenlinie der Achse 4 verkippt werden.

Durch die beiden Spiraldruckfedern 21 werden die Zahnscheiben 22 und 23 gegeneinander gedrückt, und durch die schwimmende Lagerung mittels der Spiraldruckfedern 21 ist eine gemeinsame Verkippung gegenüber der Achsenlinie der Achse 4 möglich.

Die flexiblen Spiralfedern 21 bewirken eine schwimmende Lagerung der Zahnscheiben 22 und 23, so daß bei einer leichten Verkippung einer Zahnscheibe die andere Zahnscheibe dementsprechend mit verkippt wird, so daß ein flächiger Kontakt der Zahnseiten der Zahnscheiben gewährleistet ist. Dadurch wird erreicht, daß eine möglichst große Zähnezahl der beiden Zahnscheiben in ständigem Eingriff ist, wenn Vorwärtsdrehleistung übertragen wird.

Außerdem wird durch den Einsatz zweier Federn die Belastung der einzelnen Federn geringer und zusätzlich die Beschleunigung im Antrittsfall größer, so daß ein Eingriff der Zähne der Zahnscheiben schneller erfolgt.

In dem Rotor 25 ist ein Kugellager 2c, ein Sicherungsring 32, eine Distanzhülse 31, ein weiterer Sicherungsring 32, ein Kugellager 2d und eine Abdeckscheibe 38 angeordnet.

Weiterhin wird von rechts eine Dichtung 38, ein O-Ring 42, ein Endanschlag 36 und eine Rändelscheibe oder ein Zahnring 27 angeordnet.

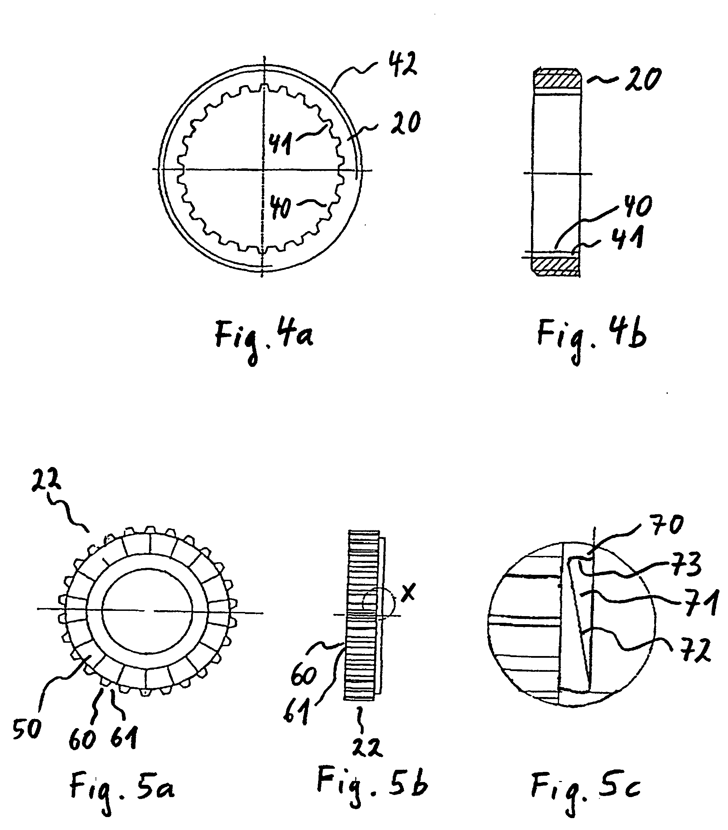

In Figur 4a ist eine Aufsicht eines Gewinderings dargestellt, welcher im dargestellten Ausführungsbeispiel aus einer Aluminiumlegierung besteht, und dessen Oberfläche durch eine Oberflächenbehandlung gehärtet ist. Neben Nikotieren oder Eloxieren sind hier auch andere im Stand der Technik bekannte Oberflächenvergütungsverfahren möglich.

Der Gewindering 20 weist eine zylindrische Form auf. Auf der Außenoberfläche ist das Gewinde 42 dargestellt, während auf dem Innenumfang die Zähne 40 und die Vertiefungen 41 zwischen den Zähnen dargestellt sind.

In Figur 4b ist ein Querschnitt durch einen Gewindering 20 dargestellt. Auf der gesamten Außenoberfläche ist ein Gewinde 42 angeordnet, während die Zähne 40 und Vertiefungen 41 über die Längsausdehnung reichen.

In Figur 5a ist eine Aufsicht auf eine Zahnscheibe 22 oder 23 dargestellt.

Die radialen Fortsätze 60 und die Vertiefungen 61 zwischen den radialen Fortsetzungen sind über den Umfang gleichmäßig verteilt. Im Ausführungsbeispiel werden 26 Fortsätze verwendet, die eine Radialverzahnung bilden.

In Figur 5b ist eine Seitenansicht der Zahnscheibe nach Figur 5a dargestellt. Auf dem Umfang verteilt sind die radialen Fortsätze 60 und die Vertiefungen 61 angeordnet.

Eine Ausschnittsvergrößerung X aus Figur 5b zeigt Figur 5c. Die Zähne der Zahnscheibe 70 haben eine Höhe von knapp 1 mm gegenüber dem tiefsten Punkt der Vertiefung 71.

Der Winkel zwischen der Schrägen 72 und der Mittelachse der Zahnscheibe beträgt etwa 79,2°, und der Winkel der Schräge 73 mit der Mittelachse beträgt etwa 10°. Die angegebenen Winkel sind als Richtwerte anzusehen und können in weiteren Ausführungsbeispielen um bis zu 10° variieren.

An den Nabenkörper 1 anschließend ist ein Rotor 25 vorgesehen, der eine Verzahnung 25a aufweist, in die entsprechend gestaltete Ausnehmung eines (nicht dargestellten) Ritzelpakets eingreifen.

Der Rotor 25 ist ebenfalls aus Aluminium oder aus einer sonstigen Leichtmetalllegierung, wie Titan und dergleichen gestaltet. Der Rotor rotiert während der Antriebsbewegung mit gleicher Drehzahl wie der Nabenkörper 1 und steht bei Stillstand des Kurbelantriebs still, so daß sich der Nabenkörper 1 dann in bezug auf den Rotor 25 bewegt.

Der Rotor stützt sich über ein Wälzlager 2c und ein Wälzlager 2d auf der Achse 4 ab, wobei diese Wälzlager wiederum dieselben Abmessungen aufweisen, wie die Wälzlager 2a und 2b.

Zwischen dem Nabenkörper 1 und dem Rotor 25 ist eine Labyrinthdichtung mit nachgeschalteter Elastomerdichtung ausgebildet, die nun in Bezugnahme auf die Figur 26 beschrieben wird.

Der Nabenkörper 1 weist eine zur Achse 4 senkrecht verlaufende ringförmige Wandung 1k auf, an die sich im Winkel von 90° eine zylindrische Wand 11 anschließt, die parallel zur Achse verläuft. Daran schließt sich wiederum senkrecht eine weitere Kreisringfläche im an, die ebenfalls um 90° in einen zylindrischen Bereich in übergeht, an den sich eine senkrechte Wand 1o anschließt. Die kreisringförmige Wand 1o und die zylindrische Wand In schließen eine Ausnehmung ein, in der eine Elastomerdichtung 28 aufgenommen ist. Diese Elastomerdichtung ist V-förmig gestaltet und weist ein im wesentlichen rechteckiges Querschnittsteil 28a auf, das einen Arm des V bildet und ein sich daran anschließendes spitz zulaufendes Teil 28b, dessen vordere Spitze 28c eine Lippendichtung bildet.

Der Rotor weist (radial von außen nach innen gesehen) an der Kontaktstelle zum Nabenkörper eine senkrechte Kreisringfläche (vorher Verzahnung) 25a auf, eine dazu im Winkel von 90° angeordnete, zum Rotor weisende zylindrische Außenfläche 25b, eine weitere Kreisringfläche 25c, eine sich daran anschließende zylindrische Außenfläche 25d und dann wiederum eine Kreisringfläche 25e auf.

An die Kreisringfläche 25e anschließend ist im Querschnitt im stumpfen Winkel eine konische Fläche 25f vorgesehen, an die sich eine Kreisringfläche 25g anschließt, an die sich wieder eine konisch verlaufende Wand 25h im Querschnitt im stumpfen Winkel anschließt.

Die Wandungen 25f, 25h umschließen eine Ausnehmung 25i. In diese Ausnehmung 25i greift die Dichtung 28 derart ein, daß die Spitze 28c des einen V-Armes auf der Fläche 25h aufliegt. Die Flächen 1k, 1l, 1m sowie die jeweils gegenüberliegenden Flächen 25a, 25b, 25c bilden eine Labyrinthdichtung.

Die Funktion dieser Dichtung und der nachgeschalteten Elastomerdichtung entspricht der Funktion der zuvor beschriebenen Dichtung am linken Anschlagelement 6. Da dieser Teil der Nabe im Betrieb durch das Ritzelpaket geschützt ist, werden hier weniger Umlenkungen für die Labyrinthdichtung benötigt, als beim linken Anschlagelement 6. In gleicher Weise wird auch beim linken Teil der Nabe bei einer Rotation die Flüssigkeit nach außen gefördert, wobei bei dieser Dichtung im Gegensatz zur Dichtung im Anschlagelement 6, auch die Elastomerdichtung selbst mitrotiert und somit die an ihr haftende Flüssigkeit ebenfalls mit nach außen abgeschleudert wird.

Die Lager 2b und 2c sind durch einen zylindrischen Ring 30 im Abstand zueinander gehalten. Ein entsprechender zylindrischer Ring 31 ist zwischen dem Lager 2c und dem ganz rechts gelegenen Lager 2d vorgesehen. Um den Außenring des Lagers 2c in bezug auf den Rotor zu halten, ist ein Sprengring 32 vorgesehen, der sich am äußeren Laufring des Lagers 2c abstützt.

Am rechten Teil der Nabe ist ein rechtes Anschlagselement 36 vorgesehen, welches aus einem zylindrischen Ansatz 36a besteht, der im Ausfallende aufgenommen wird und einem zylindrischen Ansatz 36b mit größerem Durchmesser, der einen weiteren zylindrischen Ansatz 36c aufweist, in den in gleicher Weise wie beim linken Anschlagelement ein Zahnring 27 aufgenommen ist, der aus Stahl besteht und das Anschlagelement am Ausfallende abstützt.

Benachbart zur zylindrischen Fläche 36b ist, in Richtung auf den Nabenkörper 1 hin, ein weiterer zylindrischer Ansatz 36d mit etwas kleinerem Durchmesser als der Ansatz 36b vorgesehen, in dem eine Dichtung 38 aufgenommen ist. Diese Elastomerdichtung weist als Grundkörper einen Ring mit im wesentlichen rechteckigem Querschnitt 38a auf, zu dem sich in etwa im Winkel von 45° eine Dichtungslippe 38b radial nach außen erstreckt, die zu einer Spitze 38c hin spitz zuläuft.

Die Spitze 38c stützt sich an einem Anschlagring 40 ab, der in einer zylindrischen Ausnehmung 25k des Rotors 25 gehalten ist und einen zylindrischen radialen Ansatz 40a aufweist, der sich parallel zur Achse 4a erstreckt und auf dem die Fläche 38c des vorderen Teils der Dichtung 38 aufliegt.

In gleicher Weise wie beim linken Anschlagelement ist beim rechten Anschlagelement ein Einstich 36e vorgesehen, in dem eine O-Ring-Dichtung 42 aufgenommen ist. Diese O-Ring-Dichtung ist im Hinblick auf den Einstich 36e derart bemessen, daß sie das rechte Anschlagelement durch Reibung auf der Achse hält.

Der Zusammenbau des rechten Teils der Nabe entspricht im wesentlichen dem Zusammenbau des linken Teils: die Wälzlager 2b, die Einrichtung für den Freilauf und das Wälzlager 2c werden auf die Achse aufgeschoben. Anschließend wird der Rotor mit dem eingesetzten Sprengring aufgesetzt und der zylindrische Ring 31 und das Wälzlager 2d sowie der Ring 40 aufgeschoben. Dann kann das Anschlagelement mit der Dichtung aufgesteckt werden und hält durch die Reibkraft des O-Rings auf der Achse fest. Ein besonderes Werkzeug oder eine Verriegelung der einzelnen Teile zueinander ist nicht erforderlich.

Für die Montage in das Fahrrad wird durch die längs verlaufende Bohrung 4c der Achse ein herkömmlicher Schnellspanner oder eine entsprechende Befestigungseinrichtung eingeschoben und die Nabe derart im Fahrrad befestigt, daß die inneren Flächen der Ausfallenden an den Zahnscheiben 7 und 37 anliegen. Dadurch wird die Nabe während des Betriebes zuverlässig zusammengehalten.

## Patentansprüche

1. Nabe, insbesondere für Fahrräder und dergleichen, mit:
einer Nabenachse (4),
einem im wesentlichen konzentrisch zu dieser Nabenachse angeordnetem Nabengehäuse (1),
wenigstens einer Lagereinrichtung (2), welche wenigstens zwei Lager (22, 26) beinhaltet, und welche im wesentlichen zwischen dieser Nabenachse und diesem Nabengehäuse angeordnet ist, so daß dieses Nabengehäuse (1) drehbar in bezug auf diese Nabenachse (4) gelagert ist,
einem in bezug auf diese Nabenachse (4) drehbar gelagerten Rotor (25), welcher derart gestaltet ist, daß an diesem Rotor wenigstens ein Zahnrad anzuordnen ist,
einer Freilaufeinrichtung, welche zwischen diesem Rotor (25) und diesem Nabengehäuse (1) angeordnet ist, und welche zwei Zahnscheiben aufweist, deren Zahnflächen durch eine Vorspanneinrichtung (21) aufeinander gedrückt werden,
wobei diese zwei Zahnscheiben (22, 23) im wesentlichen konzentrisch zu dieser Nabenachse (4) angeordnet sind und im bestimmungsgemäßen Zusammenbau dieser Nabe wenigstens im Ruhezustand im wesentlichen in einer Ebene senkrecht zu einer Achsenlinie dieser Nabenachse (4) angeordnet sind, und wobei
diese Zahnscheiben (22, 23) schwimmend gehalten werden, so daß eine Verkippung in bezug auf diese Ebene senkrecht zu dieser Achsenlinie dieser Nabenachse möglich ist,
**dadurch gekennzeichnet, daß** diese Vorspanneinrichtung (21) diese benachbarten Zahnscheiben (22, 23) von beiden außen liegenden Seiten mit jeweils wenigstens einer Feder (21) aufeinander drückt.

2. Nabe, nach Anspruch 1, **dadurch gekennzeichnet,**
**daß** diese Zahnscheiben benachbart angeordnet und diese Vorspanneinrichtung wenigstens zwei oder mehr Federn umfaßt.

3. Nabe nach mindestens einem der vorhergehenden Ansprüche, **dadurch gekennzeichnet,**
**daß** wenigstens eine dieser Federn dieser Vorspanneinrichtung als Spiraldruckfeder ausgeführt ist.

4. Nabe nach mindestens einem der vorhergehenden Ansprüche, **dadurch gekennzeichnet,**
**daß** eine dieser Federn dieser Vorspanneinrichtung eine Zahnscheibe schwimmend lagert, so daß diese Zahnscheibe axial gegen die kraft dieser Feder verschiebbar ist und gegenüber dieser Ebene senkrecht zu dieser Achsenlinie dieser Achse kippbar ist.

5. Nabe nach mindestens einem der vorhergehenden Ansprüche, **dadurch gekennzeichnet,**
**daß** diese zwei Zahnscheiben durch Federn dieser Vorspanneinrichtung schwimmend gelagert werden.

6. Nabe nach mindestens einem der vorhergehenden Ansprüche, **dadurch gekennzeichnet,**
**daß** wenigstens auf den aufeinander zu weisenden Scheibenflächen dieser Zahnscheiben eine Vielzahl von Zähnen angeordnet sind, wobei die Anzahl dieser Zähne größer zwei, bevorzugterweise zwischen 6 und 48 liegt.

7. Nabe nach mindestens einem der vorhergehenden Ansprüche, **dadurch gekennzeichnet,**
**daß** diese Vielzahl dieser Zähne auf einem ringförmigen Bereich dieser Scheibenfläche dieser Zahnscheiben angeordnet sind.

8. Nabe nach mindestens einem der vorhergehenden Ansprüche, **dadurch gekennzeichnet,**
**daß** diese zwei Zahnscheiben im wesentlichen identisch oder derart gefertigt sind, daß bei zwei mit den Zahnflächen direkt benachbart angeordneten Zahnscheiben wenigstens ein Teil dieser Zähne dieser ersten Zahnscheibe mit Vertiefungen zwischen diesen Zähnen dieser zweiten Zahnscheibe in Kontakt steht.

9. Nabe nach mindestens einem der vorhergehenden Ansprüche, **dadurch gekennzeichnet,**
**daß** die Zähnezahl dieser Zahnscheiben unterschiedlich ist.

10. Nabe nach mindestens einem der vorhergehenden Ansprüche, **dadurch gekennzeichnet,**
**daß** die Zähnezahl dieser Zahnscheiben gleich ist.

11. Nabe nach mindestens einem der vorhergehenden Ansprüche, **dadurch gekennzeichnet,**
**daß** bei zwei mit den Zahnflächen im Eingriff stehenden Zahnscheiben diese Zahnscheiben im wesentlichen mit einem Großteil der Scheibenflächen in Kontakt stehen.

12. Nabe nach mindestens einem der vorhergehenden Ansprüche, **dadurch gekennzeichnet,**
**daß** wenigstens eine dieser Zahnscheiben über einem Umfang dieser Zahnscheibe in radialer Richtung eine Vielzahl von Fortsätzen aufweist, welche in radialer Richtung in einer Ebene dieser Scheibenfläche einen rechteckigen, sinus-, zahn- oder trapezförmigen Querschnitt aufweisen.

13. Nabe nach mindestens einem der vorhergehenden Ansprüche, **dadurch gekennzeichnet,**
**daß** im bestimmungsgemäßen Zusammenbau in einer zur Nabenmitte ausgerichteten, im wesentlichen zentrischen Bohrung oder Öffnung dieses Rotors eine dieser Zahnscheiben in bezug auf diesen Rotor im wesentlichen drehfest angeordnet ist, und daß diese Öffnung derart gestaltet ist, daß diese Fortsätze dieser Zahnscheibe in radiale Vertiefungen dieses Rotors ragen.

14. Nabe nach mindestens einem der vorhergehenden Ansprüche, **dadurch gekennzeichnet,**
**daß** im bestimmungsgemäßen Zusammenbau in einer zum Rotor ausgerichteten im wesentlichen zentrischen Bohrung dieses Nabengehäuses ein Gewindering in dieses Nabengehäuse eingeschraubt ist, welcher eine Bohrung aufweist, in welcher eine Zahnscheibe im wesentlichen drehfest in bezug auf dieses Nabengehäuse angeordnet ist, und daß diese Bohrung in diesem Gewindering derart gestaltet ist, daß diese Fortsätze dieser Zahnscheibe in radiale Vertiefungen dieses Gewinderings ragen.

15. Nabe nach mindestens einem der vorhergehenden Ansprüche, **dadurch gekennzeichnet,**
**daß** diese Zahnscheiben für eine vorbestimmte maximale Zähnezahl ausgelegt sind und daß bei einer Zahnscheibe mit dieser maximalen Zähnezahl diese Zähne in Umfangsrichtung gleichmäßig verteilt sind.

16. Nabe nach mindestens einem der vorhergehenden Ansprüche, **dadurch gekennzeichnet,**
**daß** bei einer Zahnscheibe mit einer kleineren als dieser vorbestimmten maximalen Zähnezahl bestimmte Zähne in Umfangsrichtung weggelassen werden.

17. Nabe nach mindestens einem der vorhergehenden Ansprüche, **dadurch gekennzeichnet,**
**daß** wenigstens bei einer Zahnscheibe mit einer Zähnezahl, welche nicht durch ganzzahlige Division aus dieser maximalen Zähnezahl bestimmbar ist, der Umfangsabstand von Zahn zu Zahn variieren kann.

18. Nabe nach mindestens einem der vorhergehenden Ansprüche, **dadurch gekennzeichnet,**
**daß** bei einer Zahnscheibe mit einer kleineren als dieser maximalen Zähnezahl diese Zähne in Umfangsrichtung an Stellen angeordnet sind, und daß an einer Zahnscheibe mit dieser maximalen Zähnezahl an den entsprechenden Stellen auch Zähne angeordnet sind.

19. Nabe nach mindestens einem der vornergehenden Ansprüche, **dadurch gekennzeichnet,**
**daß** dieser Gewindering aus einer Metalllegierung, bevorzugterweise aus einer Leichtmetalllegierung und besonders bevorzugt aus einer Aluminiumlegierung besteht.

20. Nabe nach mindestens einem der vorhergehenden Ansprüche, **dadurch gekennzeichnet,**
**daß** eine Dichtungseinrichtung vorgesehen ist, welche den Zutritt von Wasser und Schmutz zu dieser Lagereinrichtung weitgehend verhindert.

21. Nabe nach mindestens einem der vorhergehenden Ansprüche, **dadurch gekennzeichnet,**
**daß** diese Dichtungseinrichtung wenigstens eine Labyrinthdichtung umfaßt.

22. Nabe nach mindestens einem der vorhergehenden Ansprüche, **dadurch gekennzeichnet,**
**daß** diese Dichtungseinrichtung zumindest eine Elastomerdichtung umfaßt.

23. Laufrad, insbesondere für Fahrräder und dergleichen, mit einer Nabe gemäß wenigstens einem der Ansprüche 1 bis 22.

24. Mehrrad, vorzugsweise Zweirad, vorzugsweise Fahrrad, mit wenigstens einer Nabe gemäß wenigstens einem der Ansprüche 1 bis 22.

## Claims

1. A hub, in particular for bicycles and the like, comprising:
a hub axis (4),
a hub shell (1) disposed essentially concentrically to said hub axis,
at least one bearing means (2) including at least two bearings (2a, 2b) and being substantially arranged between said hub axis and said hub shell, so that said hub shell (1) is mounted pivotally relative to said hub axis (4),
a rotor (25) mounted pivotally relative to said hub axis (4), wherein the rotor is configured such that at least one sprocket is arranged on said rotor,
a freewheel means arranged between said rotor (25) and said hub shell (1) and comprising two lock washers (22, 23), the tooth surfaces of which are pressed onto each other by a biasing means (21),
said two lock washers (22, 23) being arranged substantially concentrically to said hub axis (4), and, when said hub is properly assembled, being arranged at least in the idle state, substantially in a plane perpendicular to an axis line of said hub axis (4),
said lock washers (22, 23) being kept swimming, so that a tilting relative to said plane perpendicular to said axis line of said hub axis is possible,
said ??pre-??biasing means (21) pressing said adjacent lock washers (22, 23) onto each other from both external sides with at least one spring (21).

2. The hub according to claim 1, **characterized in that** said lock washers are arranged adjacent, and said pre-biasing means comprises at least two or more springs.

3. The hub according to at least one of the preceding claims, **characterized in that** at least one of said springs of said pre-biasing means is realized as a coil spring.

4. The hub according to at least one of the preceding claims, **characterized in that** one of said springs of said pre-tensioning means swimming mounts a lock washer, so that said lock washer is axially displaceable against the force of said spring, and is tiltable relative to said plane perpendicular to said axis line of said axis.

5. The hub according to at least one of the preceding claims, **characterized in that** said two lock washers are swimmingly mounted by springs of said pre-tensioning means.

6. The hub according to at least one of the preceding claims, **characterized in that** at least on the surface of said lock washers facing each other, a plurality of teeth are arranged, with the number of teeth being larger than two, preferably between 6 and 48.

7. The hub according to at least one of the preceding claims, **characterized in that** said number of teeth are arranged on an annular section of said surface of said lock washers.

8. The hub according to at least one of the preceding claims, **characterized in that** said two lock washers are manufactured essentially identical or in such a manner that in two lock washers arranged directly adjacent with the surfaces, at least part of said teeth of the first lock washer is in contact with depressions between said teeth of said second lock washer.

9. The hub according to at least one of the preceding claims, **characterized in that** the number of teeth of said lock washers is different.

10. The hub according to at least one of the preceding claims, **characterized in that** the number of teeth of said lock washers is identical.

11. The hub according to at least one of the preceding claims, **characterized in that** in two lock washers that are in engagement with said surfaces, said lock washers essentially are in contact with a larger part of the surfaces.

12. The hub according to at least one of the preceding claims, **characterized in that** at least one of said lock washers comprises a plurality of protrusions over a circumference of said lock washers in the radial direction, which protrusions, in the radial direction in a plane of said surface, are of a rectangular, sinusoidal, tooth or trapezoidal shaped cross-section.

13. The hub according to at least one of the preceding claims, **characterized in that,** in the properly assembled state, in a substantially centric bore or opening of said rotor orientated towards the hub center, one of said lock washers is arranged essentially non-pivotally relative to said rotor, and that said opening is configured in such a manner that protrusions of said lock washer protrude into radial depressions of said rotor.

14. The hub according to at least one of the preceding claims, **characterized in that,** in the properly assembled state, in a substantially centric bore of said hub shell orientated towards the rotor, a threaded ring is screwed into said hub shell, which has a bore in which one lock washer is arranged essentially non-pivotable relative to said hub shell, and that said bore in said threaded ring is configured in such a manner that said protrusions of said lock washer protrude into radial depressions of said threaded ring.

15. The hub according to at least one of the preceding claims, **characterized in that** said lock washers are adapted for a predetermined maximum number of teeth, and that in one lock washer having said maximum number of teeth, said teeth are uniformly distributed in the circumferential direction.

16. The hub according to at least one of the preceding claims, **characterized in that** in a lock washer having a number of teeth smaller than said predetermined maximum number of teeth, certain teeth are omitted in the circumferential direction.

17. The hub according to at least one of the preceding claims, **characterized in that** at least in one lock washer having a number of teeth, which may not be determined by an integer division from said maximum number of teeth, the circumferential spacing may vary from tooth to tooth.

18. The hub according to at least one of the preceding claims, **characterized in that** in a lock washer having a number of teeth smaller than said maximum number of teeth, said teeth are arranged in places in the circumferential direction, and that on a lock washer having said maximum number of teeth, teeth are also arranged in the corresponding places.

19. The hub according to at least one of the preceding claims, **characterized in that** said threaded ring is made of a metal alloy, preferably of a light metal alloy, and particularly preferred, of an aluminum alloy.

20. The hub according to at least one of the preceding claims, **characterized in that** a sealing means is provided preventing substantially the access of water and dirt to said bearing means.

21. The hub according to at least one of the preceding claims, **characterized in that** said sealing means comprises at least one labyrinth seal.

22. The hub according to at least one of the preceding claims, **characterized in that** said sealing means comprises at least one elastomer seal.

23. A wheel, in particular intended for bicycles and the like, having a hub according to at least one of the claims 1 through 22.

24. Multiple-wheel device, preferably two-wheel device, preferably bicycle, comprising at least one hub according to at least one of the claims 1 through 22.

## Revendications

1. Moyeu, en particulier pour bicyclettes ou semblables, comportant :
un axe de moyeu (4),
un boîtier de moyeu (1) disposé essentiellement concentrique audit axe de moyeu,
au moins un dispositif de palier (2) comprenant au moins deux paliers (24, 26) et qui est, pour l'essentiel, disposé entre ledit axe de moyeu et ledit boîtier de moyeu si bien que ledit boîtier de moyeu (1), par rapport audit axe de moyeu (4), est monté de manière rotative,
un rotor (25) disposé de manière rotative par rapport audit axe de moyeu (4) et conformé de manière telle qu'au moins une roue dentée est à disposer audit rotor,
un dispositif de roue libre disposé entre ledit rotor (25) et ledit boîtier de moyeu (1), comprenant deux plaques dentées (22, 23) dont les surfaces de dent sont pressées les unes contre les autres par un dispositif de prétension (21),
lesdites deux plaques dentées (22, 23) étant pour l'essentiel disposées de manière concentrique audit axe de moyeu (4) et dans l'assemblage conforme aux prescriptions dudit moyeu, sont, au moins à l'état de repos, pour l'essentiel, disposées en un plan perpendiculaire à une ligne d'axe dudit axe de moyeu (4) et
lesdites plaques dentées (22, 23) étant maintenues flottantes de façon à ce qu'un basculement par rapport à ce plan, perpendiculaire à ladite ligne d'axe dudit axe de moyeu soit possible,
**caractérisé en ce que**
ledit dispositif de prétension (21) pousse l'une contre l'autre lesdites plaques dentées (22, 23) avoisinantes à partir des deux côtés extérieurs avec chaque fois au moins un ressort (21).

2. Moyeu selon la revendication 1,
**caractérisé en ce que**
lesdites plaques dentées sont disposées de manière avoisinante et que ledit dispositif de prétension comprend au moins deux ressorts ou plus.

3. Moyeu selon au moins l'une des revendications précédentes, **caractérisé en ce que**
au moins l'un desdits ressorts dudit dispositif de prétension est réalisé en tant que ressort spiral de pression.

4. Moyeu selon au moins l'une des revendications précédentes, **caractérisé en ce que**
l'un desdits ressorts dudit dispositif de prétension monte de manière flottante une plaque dentée, si bien que ladite plaque dentée peut coulisser dans le sens axial contre la force dudit ressort et peut être basculée par rapport à ce plan, perpendiculairement à ladite ligne d'axe dudit axe.

5. Moyeu selon au moins l'une des revendications précédentes, **caractérisé en ce que**
lesdites deux plaques dentées sont montées de manière flottante par des ressorts dudit dispositif de prétension.

6. Moyeu selon au moins l'une des revendications précédentes, **caractérisé en ce que,**
au moins aux surfaces de plaques devant se faire face les unes aux autres desdites plaques dentées, une pluralité de dents est disposée, le nombre desdites dents étant supérieur à deux, de manière préférée entre 6 et 48.

7. Moyeu selon au moins l'une des revendications précédentes, **caractérisé en ce que**
ladite pluralité desdites dents est disposée sur une zone annulaire de ladite surface de plaque desdites plaques dentées.

8. Moyeu selon au moins l'une des revendications précédentes, **caractérisé en ce que**
lesdites deux plaques dentées sont pour l'essentiel identiques ou réalisées de manière telle que pour deux plaques dentées disposées de manière avoisinante directement avec lesdites surfaces de dents, au moins une partie desdites dents de ladite première plaque dentée est en contact avec des creux entre lesdites dents de ladite deuxième plaque dentée.

9. Moyeu selon au moins l'une des revendications précédentes, **caractérisé en ce que**
le nombre de dents desdites plaques dentées est différent.

10. Moyeu selon au moins l'une des revendications précédentes, **caractérisé en ce que**
le nombre de dents desdites plaques dentées est égal.

11. Moyeu selon au moins l'une des revendications précédentes, **caractérisé en ce que**
pour deux plaques dentées engagées avec lesdites surfaces de dents, lesdites plaques dentées sont pour l'essentiel en contact avec une majeure partie des surfaces de plaque.

12. Moyeu selon au moins l'une des revendications précédentes, **caractérisé en ce que**
au moins une desdites plaques dentées présente une pluralité de prolongements en direction radiale sur une périphérie de ladite plaque dentée qui présentent en direction radiale dans un plan de ladite surface de plaque une section rectangulaire, sinusoïdale, en dent de scie ou en trapèze.

13. Moyeu selon au moins l'une des revendications précédentes, **caractérisé en ce que**
dans l'assemblage conforme aux prescriptions, dans un perçage ou une ouverture dudit rotor, aligné sur le milieu du moyeu, pour l'essentiel centré, l'une desdites plaques dentées est disposée pour l'essentiel sans pouvoir pivoter par rapport audit rotor et que ladite ouverture est formée de manière telle que lesdits prolongements de ladite plaque dentée saillent dans des creux radiaux dudit rotor.

14. Moyeu selon au moins l'une des revendications précédentes, **caractérisé en ce que**
dans l'assemblage conforme aux prescriptions, dans un perçage dudit boîtier de moyeu, aligné sur le rotor, pour l'essentiel centré, un anneau de filetage est vissé dans ledit boîtier de moyeu, lequel anneau présente un perçage dans lequel est disposée une plaque dentée, pour l'essentiel sans pouvoir pivoter par rapport audit boîtier de moyeu et que ledit perçage dans ledit anneau de filetage est formé de manière telle que lesdits prolongements de ladite plaque dentée saillent dans des creux radiaux dudit anneau de filetage.

15. Moyeu selon au moins l'une des revendications précédentes, **caractérisé en ce que**
lesdites plaques dentées sont étudiées pour un nombre maximal prédéterminé de dents et que dans le cas d'une plaque dentée comportant ce nombre maximal de dents, lesdites dents sont réparties de manière uniforme en direction de la périphérie.

16. Moyeu selon au moins l'une des revendications précédentes, **caractérisé en ce que** dans le cas d'une plaque dentée comportant un nombre de dents inférieur à ce nombre maximal prédéterminé, certaines dents sont omises en direction de la périphérie.

17. Moyeu selon au moins l'une des revendications précédentes, **caractérisé en ce que**
au moins dans le cas d'une plaque dentée d'un nombre de dents qui ne peut pas être déterminé par une division entière à partir dudit nombre maximal de dents, l'écartement périphérique peut varier de dent à dent.

18. Moyeu selon au moins l'une des revendications précédentes, **caractérisé en ce que**
dans le cas d'une plaque dentée d'un nombre de dents plus petit que ce nombre maximal de dents, lesdites dents en direction de la périphérie sont disposées en des emplacements et que dans le cas d'une plaque dentée du nombre maximal de dents, des dents sont également disposées aux emplacements correspondants.

19. Moyeu selon au moins l'une des revendications précédentes, **caractérisé en ce que**
ledit anneau de filetage est constitué d'un alliage de métal, de manière préférée, d'un alliage léger de métal et, de manière particulièrement préférée, d'un alliage d'aluminium.

20. Moyeu selon au moins l'une des revendications précédentes, **caractérisé en ce que**
un dispositif d'étanchéité est prévu qui interdit largement l'accès de l'eau et de la saleté audit dispositif de palier.

21. Moyeu selon au moins l'une des revendications précédentes, **caractérisé en ce que**
ledit dispositif d'étanchéité comprend au moins un joint à labyrinthe.

22. Moyeu selon au moins l'une des revendications précédentes, **caractérisé en ce que**
ledit dispositif d'étanchéité comprend au moins un joint en élastomère.

23. Roue, en particulier pour bicyclettes ou semblables, équipée d'un moyeu selon au moins l'une des revendications 1 à 22.

24. Véhicule à plusieurs roues, de manière préférée, à deux roues, de manière préférée, bicyclette, comportant au moins un moyeu selon au moins l'une des revendications 1 à 22.
